# EUROPEAN PATENT APPLICATION

(11) **EP 4 668 844 A1**
(43) Date of publication of application: **24.12.2025**
(21) Application number: 23930063.5
(22) Date of filing: 08.12.2023
(51) Int. Cl.: H04W 28/02

(54) **INFORMATION PROCESSING METHOD AND APPARATUS**

(30) Priority: 31.03.2023 CN 202310365217
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: MERH-IP Matias Erny Reichl Hoffmann Patentanwälte PartG mbB
(86) International application number: PCT/CN2023/137429
(87) International publication number: WO 2024/198498

(57) **Abstract**

Embodiments of this application provide an information processing method and apparatus. The method includes: generating or transmitting a first report, where the first report includes a latest first uplink data volume, and/or includes a latest first residual delay of uplink data. In this application, the first report is set to include the first uplink data volume and/or the first residual delay of uplink data in a latest state, so that it may be ensured that even if the uplink data is discarded, the first report also includes related information of the discarded uplink data, to avoid causing a waste of resources due to a redundant volume of buffered data or a residual delay included in the first report as a result of discarding of the uplink data.

## Description

This application claims priority to Chinese Patent Application No. 202310365217.1, filed with the China National Intellectual Property Administration on March 31, 2023 and entitled "INFORMATION PROCESSING METHOD AND APPARATUS", which is incorporated herein by reference in its entirety.

### TECHNICAL FIELD

This application relates to the field of communication technologies, and in particular, to an information processing method and apparatus.

### BACKGROUND

A terminal device needs to report a buffer status report (buffer status report, BSR) to a network device when applying for an uplink resource from the network device, so that the network device schedules an appropriate uplink resource for the terminal device.

Before the terminal device sends the uplink data, the uplink data may be discarded. If the uplink data is discarded, a volume of uplink data buffered in the terminal device may change greatly. If the buffer status report is reported to the network device before the uplink data is discarded, the terminal device may report a redundant buffer volume, and then the network device may allocate redundant uplink resources, resulting in a waste of resources.

### SUMMARY

Embodiments of this application provide an information processing method and apparatus, applied to the field of terminal technologies.

According to a first aspect, an embodiment of this application provides an information processing method, applied to a terminal device. The method includes:
generating or transmitting a first report, where the first report includes a latest first uplink data volume, and/or includes a latest first residual delay of uplink data.

In a possible design, the latest first uplink data volume and/or the latest first residual delay is determined at a first moment; and
the first moment is at least one of the following: a moment for determining a first resource for sending the first report; a moment when the first resource arrives; and a moment when update indication information is obtained, where the update indication information is used to indicate discarding of the uplink data, or the update indication information is used to indicate a residual uplink data volume after the discarding and/or a residual delay of residual uplink data after the discarding.

In a possible design, the method further includes:
canceling a triggered second report if the uplink data is discarded.

In a possible design, the second report is the first report; or the second report includes a second uplink data volume and/or a second residual delay.

In a possible design, the canceling a triggered second report if the uplink data is discarded includes:
canceling the triggered second report if the uplink data is discarded and no uplink data exists in a first channel, where the first channel includes at least one of the following: a logical channel, a logical channel group, a PDU set, and data burst information.

In a possible design, the logical channel is a logical channel that triggers the second report, the logical channel group is a logical channel group that triggers the second report, and the PDU set is a PDU set that triggers the second report, or the data burst information is data burst information that triggers the second report.

In a possible design, the method further includes:
re-evaluating a triggering condition of the second report if the uplink data is discarded; and
re-triggering the second report when the triggering condition is satisfied.

In a possible design, the method further includes:
triggering a third report if the uplink data is discarded, where the third report is used to update an uplink data volume and/or a residual delay of the uplink data.

In a possible design, the third report is the first report or the second report.

In a possible design, the terminal device includes a medium access control MAC layer, and the triggering a third report includes:
receiving, by the MAC layer, higher-layer indication information, where the higher-layer indication information is used to indicate that the uplink data is discarded; and
triggering, by the MAC layer, the third report based on the higher-layer indication information.

In a possible design, the higher-layer indication information is used to indicate a first channel group to which the discarded uplink data belongs; and
the triggering, by the MAC layer, the third report based on the higher-layer indication information includes:
determining, by the MAC layer based on the higher-layer indication information, whether the first channel to which the discarded uplink data belongs has triggered the third report; and
triggering the third report if so.

In a possible design, the third report includes cause indication information, and the cause indication information is used to indicate that the third report is triggered due to the discarding of the uplink data, or is used to indicate that an uplink data volume and/or a residual delay included in the third report is obtained after the uplink data is discarded.

In a possible design, the third report includes a volume of discarded uplink data and/or delay information of the discarded uplink data.

In a possible design, the third report further includes a first channel corresponding to the discarded uplink data.

In a possible design, the discarded uplink data includes at least one protocol data unit PDU set.

According to a second aspect, an embodiment of this application provides an information processing method, applied to a terminal device. The method includes:
canceling a triggered second report if the uplink data is discarded.

According to a third aspect, an embodiment of this application provides an information processing method, applied to a terminal device. The method includes:
re-evaluating a triggering condition of the second report if the uplink data is discarded; and
re-triggering the second report when the triggering condition is satisfied.

According to a fourth aspect, an embodiment of this application provides an information processing method, applied to a terminal device. The method includes:
triggering a third report if the uplink data is discarded, where the third report is used to update an uplink data volume and/or a residual delay of the uplink data.

According to a fifth aspect, an embodiment of this application provides an information processing method, applied to a network device. The method includes:
sending configuration information, where the configuration information is used to indicate at least one of the following information:
whether a terminal device reports a latest first uplink data volume and/or a latest first residual delay of uplink data;
a first moment for determining the latest first uplink data volume or the latest first residual delay; a moment for determining a first resource for sending the first uplink data volume and/or the first residual delay; a moment when the first resource arrives; and at least one of moments when update indication information is obtained, where the update indication information is used to indicate discarding of the uplink data, or the update indication information is used to indicate a residual uplink data volume after the discarding and/or a residual delay of residual uplink data after the discarding;
whether the terminal device cancels the triggered second report when the uplink data is discarded;
first channel information, where the first channel information is used to determine whether to cancel the triggered second report;
whether the terminal device re-evaluates a triggering condition of the second report when the uplink data is discarded; and
whether the terminal device triggers a third report when the uplink data is discarded, where the third report is used to update an uplink data volume and/or a residual delay of the uplink data.

According to a sixth aspect, an embodiment of this application provides an information processing method, applied to a network device. The method includes:
receiving a first report, where the first report includes a latest first uplink data volume, and/or includes a latest first residual delay of uplink data.

In a possible design, the latest first uplink data volume and/or the latest first residual delay is determined at a first moment; and
the first moment is at least one of the following: a moment for determining a first resource for sending the first report; a moment when the first resource arrives; and a moment when update indication information is received, where the update indication information is used to indicate a data volume and/or a residual delay of the discarded uplink data.

In a possible design, if the uplink data is discarded, triggering of the second report is canceled.

In a possible design, the second report is the first report; or the second report includes a second uplink data volume and/or a second residual delay.

In a possible design, triggering of the second report is canceled if the uplink data is discarded and no uplink data exists in a first channel, where the first channel includes at least one of the following: a logical channel, a logical channel group, a PDU set, and data burst information.

In a possible design, the logical channel is a logical channel that triggers the second report, the logical channel group is a logical channel group that triggers the second report, and the PDU set is a PDU set that triggers the second report, or the data burst information is data burst information that triggers the second report.

In a possible design, the method further includes:
receiving a second report, where the second report is triggered when it is determined through re-evaluation that a triggering condition of the second report is satisfied after the uplink data is discarded.

In a possible design, the method further includes:
receiving a third report, where the third report is triggered when the uplink data is discarded, and the third report is used to update an uplink data volume and/or a residual delay of the uplink data.

In a possible design, the third report is the first report or the second report.

In a possible design, the third report includes cause indication information, and the cause indication information is used to indicate that the third report is sent due to the discarding of the uplink data, or is used to indicate that an uplink data volume and/or a residual delay included in the third report is obtained after the uplink data is discarded.

In a possible design, the third report includes a volume of discarded uplink data and/or delay information of the discarded uplink data.

In a possible design, the third report further includes a first channel corresponding to the discarded uplink data.

In a possible design, the discarded uplink data includes at least one PDU set.

According to a seventh aspect, an embodiment of this application provides an information processing apparatus, including:
a processing module, configured to generate a first report, where the first report includes a latest first uplink data volume, and/or includes a latest first residual delay of uplink data; and
a sending module, configured to transmit the first report.

According to an eighth aspect, an embodiment of this application provides an information processing apparatus, including:
a sending module, configured to send configuration information, where the configuration information is used to indicate at least one of the following information:
whether a terminal device reports a latest first uplink data volume and/or a latest first residual delay of uplink data;
a first moment for determining the latest first uplink data volume or the latest first residual delay; a moment for determining a first resource for sending the first uplink data volume and/or the first residual delay; a moment when the first resource arrives; and at least one of moments when update indication information is obtained, where the update indication information is used to indicate discarding of the uplink data, or the update indication information is used to indicate a residual uplink data volume after the discarding and/or a residual delay of residual uplink data after the discarding;
whether the terminal device cancels the triggered second report when the uplink data is discarded;
first channel information, where the first channel information is used to determine whether to cancel the triggered second report;
whether the terminal device re-evaluates a triggering condition of the second report when the uplink data is discarded; and
whether the terminal device triggers a third report when the uplink data is discarded, where the third report is used to update an uplink data volume and/or a residual delay of the uplink data.

According to a ninth aspect, an embodiment of this application provides an information processing apparatus, including:
a receiving module, configured to receive a first report, where the first report includes a latest first uplink data volume, and/or includes a latest first residual delay of uplink data.

According to a tenth aspect, an embodiment of this application provides an information processing apparatus, including:
a processing module, configured to cancel a triggered second report if the uplink data is discarded.

According to an eleventh aspect, an embodiment of this application provides an information processing apparatus, including:
a processing module, configured to re-evaluate a triggering condition of the second report if the uplink data is discarded; and
the processing module is further configured to re-trigger the second report when the triggering condition is satisfied.

According to a twelfth aspect, an embodiment of this application provides an information processing apparatus, including:
a processing module, configured to trigger a third report if the uplink data is discarded, where the third report is used to update an uplink data volume and/or a residual delay of the uplink data.

According to a thirteenth aspect, an embodiment of this application provides a terminal device. The terminal device may also be referred to as a terminal (terminal), a user equipment (user equipment, UE), a mobile station (mobile station, MS), a mobile terminal (mobile terminal, MT), or the like. The terminal device may be a mobile phone (mobile phone), a smart television, a wearable device, a tablet computer (Pad), a computer with a wireless transceiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes: a processor and a memory. The memory stores a computer-executable instruction. The processor is configured to execute the computer-executable instruction stored in the memory, so that the terminal device performs the method according to the first aspect.

According to a fourteenth aspect, an embodiment of this application provides a computer-readable storage medium, and a computer program is stored in the computer-readable storage medium. The computer program, when executed by a processor, implements the method according to the first aspect to the sixth aspect.

According to a fifteenth aspect, an embodiment of this application provides a computer program product. The computer program product includes a computer program. The computer program, when run, causes a computer to perform the method according to the first aspect to the sixth aspect.

According to a sixteenth aspect, an embodiment of this application provides a chip. The chip includes a processor. The processor is configured to invoke a computer program in a memory to perform the method according to the first aspect to the sixth aspect.

This application provides an information processing method and apparatus, to prevent a terminal device from reporting a redundant volume of buffered data and/or residual delay, thereby reducing a waste of resources.

### BRIEF DESCRIPTION OF DRAWINGS

FIG. 1 is a schematic diagram of a communication scenario according to an embodiment of this application;
FIG. 2 is a flowchart of an information processing method according to an embodiment of this application;
FIG. 3 is a flowchart II of an information processing method according to an embodiment of this application;
FIG. 4 is a schematic diagram I of an implementation of canceling triggering of a report according to an embodiment of this application;
FIG. 5 is a schematic diagram II of an implementation of canceling triggering of a report according to an embodiment of this application;
FIG. 6 is a flowchart III of an information processing method according to an embodiment of this application;
FIG. 7 is a schematic diagram I of an implementation of re-evaluating a triggering condition according to an embodiment of this application;
FIG. 8 is a schematic diagram II of an implementation of re-evaluating a triggering condition according to an embodiment of this application;
FIG. 9 is a flowchart IV of an information processing method according to an embodiment of this application;
FIG. 10 is a schematic diagram I of a format of a third report according to an embodiment of this application;
FIG. 11 is a schematic diagram of discarding uplink data according to an embodiment of this application;
FIG. 12 is a schematic timing diagram of data discarding according to an embodiment of this application;
FIG. 13 is a schematic diagram II of a format of a third report according to an embodiment of this application;
FIG. 14 is a schematic diagram III of a format of a third report according to an embodiment of this application;
FIG. 15 is a schematic structural diagram I of an information processing apparatus according to an embodiment of this application; and
FIG. 16 is a schematic structural diagram II of an information processing apparatus according to an embodiment of this application.

### DESCRIPTION OF EMBODIMENTS

To better understand the technical solutions of this application, related concepts and related technologies involved in this application are described below.

Terminal device: The terminal device may be a device that includes a wireless transceiving function and that may cooperate with a network device to provide a communication service for a user. Specifically, the terminal device may be a user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. For example, the terminal device may be a cellular phone, a cordless telephone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an on-board device, a wearable device, or a terminal device in a future 5G network or a network after 5G.

Network device: The network device may be a device configured to communicate with a terminal device, for example, may be a base station (Base Transceiver Station, BTS) in a global system for mobile communication (Global System for Mobile Communication, GSM) or code division multiple access (Code Division Multiple Access, CDMA) communication system, or may be a base station (NodeB, NB) in a wideband code division multiple access (Wideband Code Division Multiple Access, WCDMA) system, and may further be an evolved base station (Evolutional Node B, eNB or eNodeB) in an LTE system, or the network device may be a relay station, an access point, an on-board device, a wearable device, a network side device in a future 5G network or a network after 5G, a network device in a future evolved public land mobile network (Public Land Mobile Network, PLMN) network, or the like.

The network device involved in embodiments of this application may also be referred to as a radio access network (Radio Access Network, RAN) device. The RAN device is connected to the terminal device, and is configured to receive data of the terminal device and send the data to a core network device. The RAN device corresponds to different devices in different communication systems, for example, corresponds to a base station and a base station controller in a 2G system, corresponds to a base station and a radio network controller (Radio Network Controller, RNC) in a 3G system, corresponds to an evolved base station (Evolutional Node B, eNB) in a 4G system, and corresponds to a 5G system in a 5G system, for example, an access network device (for example, a gNB, a centralized unit CU, and a distributed unit DU) in new radio (New Radio, NR).

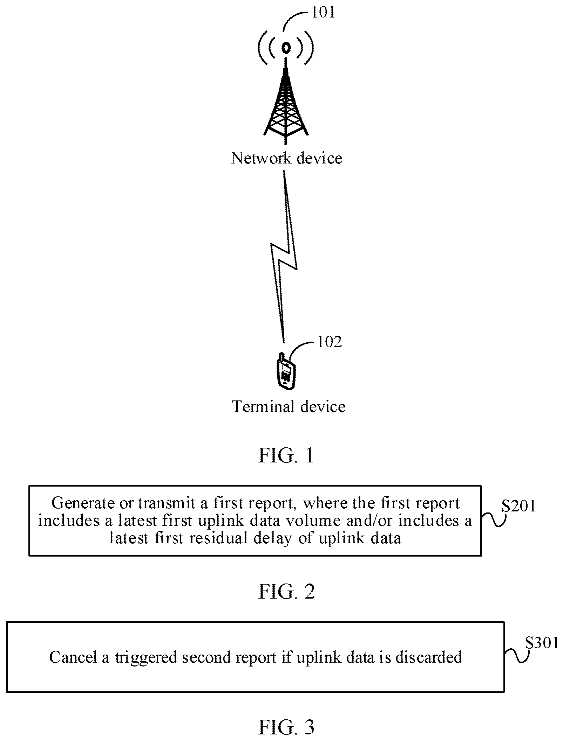

A scenario to which the resource processing method in this application is applicable is described below with reference to FIG. 1.

FIG. 1 is a schematic diagram of a communication scenario according to an embodiment of this application. Referring to FIG. 1, a network device 101 and a terminal device 102 are included. The network device 101 and the terminal device 102 may perform wireless communication. The terminal device 102 may communicate with at least one core network through a radio access network (Radio Access Network, RAN).

The communication system may be a global system for mobile communications (Global System of Mobile communication, referred to as GSM for short), a code division multiple access (Code Division Multiple Access, referred to as CDMA for short) system, a wideband code division multiple access (Wideband Code Division Multiple Access, referred to as WCDMA for short) system, a long term evolution (Long Term Evolution, referred to as LTE for short) system, or a fifth generation mobile communication (5th-Generation, referred to as 5G for short) system.

Correspondingly, the network device may be a base station (Base Transceiver Station, referred to as BTS for short) in a GSM system or a CDMA system, or may be a base station (NodeB, referred to as NB for short) in a WCDMA system, may further be an evolved base station (evolved NodeB, referred to as eNB for short), an access point (access point, AP), or a relay station in an LTE system, or may be a base station in a 5G system, or the like. This is not limited herein.

The 5G mobile communication system in this application includes a non-standalone (non-standalone, NSA) 5G mobile communication system and/or a standalone (standalone, SA) 5G mobile communication system. The technical solutions provided in this application may be further applied to a future communication system, for example, a sixth generation mobile communication system. The communication system may further be a PLMN network, a device-to-device (device-to-device, D2D) network, a machine-to-machine (machine to machine, M2M) network, an IoT network, or another network.

It may be understood that if the technical solution in embodiments of this application is applied to another wireless communication network, a corresponding name may be replaced with a name of a corresponding function in another wireless communication network.

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of a new service scenario, the technical solutions provided in embodiments of this application are also applicable to a similar technical problem.

Based on the foregoing content, a PDU (protocol data unit, Protocol Data Unit) and a PDU set (set) are briefly described below.

A PDU is a data unit for performing data transfer between peer layers. A PDU may be established on each layer, an RLC PDU may be established on a radio link control (Radio Link Control, RLC) layer, a PDCP PDU may be established on a packet data convergence protocol (Packet Data Convergence Protocol, PDCP) layer, and a MAC PDU may be established on a media access control (Media Access Control, MAC) layer.

Currently, a concept of the PDU set is introduced in related technologies. For example, a plurality of PDUs may form one PDU set. Generally, a data volume size of one PDU set is in a range of several Mbits (megabits) to several hundreds of Mbits.

For an NR system, the terminal device buffers data at the RLC layer and the PDCP layer. If the PDU set is discarded, a volume of buffered data of the terminal device may change greatly.

A BSR and a residual delay report are briefly described again below.

In the NR system, a terminal device may store uplink data in a buffer (buffer), and then apply for an uplink resource from a network device through the BSR. The BSR is used to provide information about an uplink data volume to the network device, and may transfer information about an uplink data volume that needs to be transmitted in the buffer of the terminal device.

Moreover, the uplink data may have a residual delay. In a possible implementation, residual delay information may be carried in the BSR, to inform the network device of the residual delay of the uplink data through the BSR. In other words, the BSR in this application may be understood as a common report of the buffer status and the residual delay. Alternatively, the BSR and the residual delay report are two independent reports. The BSR is used to provide information about an uplink data volume, and the residual delay report is used to provide residual delay information of the uplink data. In an actual implementation process, whether the BSR and the residual delay report are an integrated report or two independent reports may be selected based on an actual requirement.

Therefore, it may be determined based on the foregoing description that the terminal device may send the BSR and/or the residual delay report to the network device, to provide the data volume information and the residual delay information of the uplink data to the network device.

However, because the PDU set may be discarded, it correspondingly means that the uplink data is discarded. If the terminal device has reported an uplink data volume or a residual delay of the uplink data before the PDU set is discarded, and is waiting for allocation of the network device, the terminal device may report a redundant uplink data volume, and the network device may allocate redundant uplink resources, resulting in a waste of resources. It is very likely to increase the burden on the network side and lead to a deteriorated condition of the entire link.

For the technical problems described above, it is urgent to provide a method to timely update a changing situation of uplink data caused by the PDU set, thereby reducing a waste of resources.

The information processing method provided in this application is described below with reference to specific embodiments. First, relevant embodiments on a terminal device side are described.

FIG. 2 is a flowchart of an information processing method according to an embodiment of this application.

As shown in FIG. 2, the method includes:
S201: Generate or transmit a first report, where the first report includes a latest first uplink data volume, and/or includes a latest first residual delay of uplink data.

In this embodiment, the first report may be triggered when a triggering condition of the first report is satisfied. After the first report is triggered, if a valid resource exists, the first report is generated or transmitted on the valid resource. The first report may include a data volume of the uplink data in a latest state, which is referred to as a first uplink data volume in this embodiment.

Additionally/alternatively, the first report in this embodiment may further include a residual delay of the uplink data in the latest state, which is referred to as a first residual delay in this embodiment.

The uplink data is, for example, to-be-sent data buffered in a buffer of a terminal device. The uplink data may be first transmitted data, or may be repeatedly transmitted data. Therefore, the data volume may be a volume of buffered data. This is not limited in this embodiment.

In this embodiment, the first report may be a BSR, and the BSR may include the first uplink data volume and/or the first residual delay.

The following is a brief description of a BSR format. The BSR MAC CE (Control Element, control element) may be divided into six categories: a short BSR format (Short BSR format), a short truncated BSR format (Short Truncated BSR format), a long BSR format (Long BSR format), a long truncated BSR format (long truncated BSR format), an extended short BSR format (Extend Short BSR format), and an extended short truncated BSR format (Extend Short Truncated BSR format).

Alternatively, the first report in this embodiment may further include two independent reports: a BSR and a residual delay report. The BSR includes the first uplink data volume, and the residual delay report includes the first residual delay.

In a possible implementation, when the BSR and the residual delay report are two independent reports, after the BSR or the residual delay report is triggered, two reports may be sent or generated based on a logical channel priority. The logical channel priority of the BSR is higher than the logical channel priority of the residual delay report. Compared with uplink scheduling, reporting of a buffer volume has a better optimization effect for scheduling than reporting of the residual delay. Therefore, the logical channel priority of the BSR should be higher than the logical channel priority of the residual delay report. During transmission, when the BSR may be sent through valid uplink resources based on a result of the uplink logical channel priority, the BSR is generated or transmitted. Similarly, when the residual delay report may be sent through valid uplink resources based on the result of the uplink logical channel priority, the residual delay report is generated or transmitted.

In the foregoing two examples, the first report may further include at least one of logical channel information, logical channel group information, PDU set information, and data burst information corresponding to the first uplink data volume and/or the first residual delay. In other words, the first uplink data volume or the first residual delay is calculated for at least one of the logical channel information, the logical channel group information, the PDU set information, or the data burst information. In other words, the first report includes a volume of buffered data and/or a residual delay of at least one logical channel, logical channel group, PDU set, and data burst.

In this embodiment, the first report is set to include the first uplink data volume and/or the first residual delay of uplink data in a latest state, so that it may be ensured that even if the uplink data is discarded, the first report also includes related information of the discarded uplink data, to avoid causing a waste of resources due to a redundant volume of buffered data or a residual delay included in the first report as a result of the uplink data being not discarded when the first report is triggered, but the uplink data being discarded before the first report is generated or transmitted.

To ensure that the first report includes the latest first uplink data volume and/or the latest first residual delay of the uplink data, it is very important to determine a moment of the first uplink data volume and/or the first residual delay. In this embodiment, the latest first uplink data volume and/or the latest first residual delay may be determined at a first moment.

In a possible implementation, the first moment in this embodiment is at least one of the following: a moment for determining a first resource for sending the first report; a moment when the first resource arrives; and a moment when update indication information is obtained, where the update indication information is used to indicate discarding of the uplink data, or the update indication information is used to indicate a residual uplink data volume after the discarding and/or a residual delay of residual uplink data after the discarding.

First, the first resource is described. After the first report is triggered, a valid resource that can be configured to send the first report further needs to be determined. In this embodiment, the valid resource that can be configured to send the first report is referred to as the first resource.

The first moment in this embodiment may be a moment when the first resource is determined. After the first resource is determined, it usually takes some time for the first resource to actually arrive. The first moment may further be the moment when the first resource arrives.

It may be understood that the moment when the first resource is determined and the moment when the first resource arrives are both before the sending moment of the BSR and as close as possible to the sending moment of the BSR. In other words, before the BSR is sent, the uplink data volume and the residual delay are determined as late as possible, so as to ensure that the first uplink data volume and the first residual delay in the first report are latest relevant data as much as possible.

Next, the update indication information is described. The MAC layer may obtain update indication information sent by a higher layer. In a possible implementation, the update indication information is used to indicate discarding of the uplink data. The first uplink data volume and/or the first residual delay in the latest state after the discarding occurs may be determined based on the obtained update indication information. Alternatively, the update indication information is further used to indicate a residual uplink data volume after the discarding occurs and/or a residual delay of the residual uplink data after the discarding. The first uplink data volume and/or the first residual delay may be directly obtained from the update indication information.

For a case where the first moment is a moment when the update indication information is obtained, it may be that before the first report is sent, the first report already includes a determined uplink data volume and/or residual delay. After the update indication information is obtained, the uplink data volume and/or the residual delay included in the first report may be updated, so that the first report includes the latest first uplink data volume and/or first residual delay.

Alternatively, it is also possible that before the first report is sent, the uplink data volume and/or the residual delay have not yet been determined in the first report. Then after the update indication information is obtained, the first uplink data volume and/or the first residual delay in the first report may be determined.

A possible determining manner of the first moment is described above. The relevant data in the first report is determined at these moments, which may ensure that if uplink data is discarded after the first report is triggered but the first report has not been sent, the first report includes a data volume and/or a residual delay of the uplink data in a latest state, thereby avoiding causing a waste of resources in network device scheduling due to a redundant uplink data volume included in the first report as a result of the uplink data being not discarded when the first report is triggered, but the uplink data being discarded before the first report is generated or transmitted.

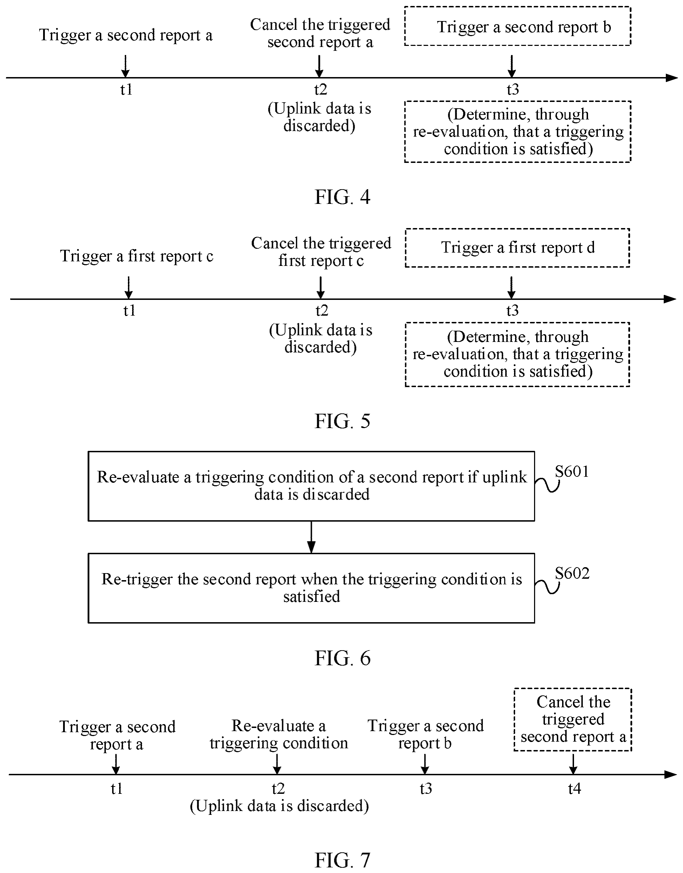

An implementation of setting the first report to include a latest first uplink data volume and/or a latest first residual delay to avoid a waste of resources is described in the foregoing embodiments. Another possible implementation in this application is described below with reference to FIG. 3 to FIG. 5 again. FIG. 3 is a flowchart II of an information processing method according to an embodiment of this application, FIG. 4 is a schematic diagram I of an implementation of canceling triggering of a report according to an embodiment of this application, and FIG. 5 is a schematic diagram II of an implementation of canceling triggering of a report according to an embodiment of this application.

As shown in FIG. 3, the method includes:
S301: Cancel a triggered second report if uplink data is discarded.

In this embodiment, discarding of the uplink data may be discarding of a first data stream, the first data stream may be a data stream such as a PDU set or a data burst, and the first data stream may be a data stream including one or more data units (a PDU and an SDU).

In this embodiment, it may be determined, by obtaining indication information related to data discarding (which may be obtained from a network side or implemented through interaction inside a terminal device), whether the uplink data is discarded, so as to determine that the uplink data is discarded.

In this embodiment, the second report may be the first report described above. In other words, the second report includes a latest first uplink data volume and/or a latest first residual delay.

Alternatively, the second report may be different from the first report described above. The second report includes a second uplink data volume and/or a second residual delay of the uplink data. A moment when the second uplink data volume and the second residual delay are determined is not limited in this embodiment, which may be determined at any moment after the second report is triggered. Therefore, whether the second uplink data volume in the second report is a data volume of the uplink data in a latest state and whether the second residual delay in the second report is a residual delay of the uplink data in a latest state are not limited in this application.

It may be understood that discarding of uplink data is a condition for canceling the triggered second report.

Implementations of two cases of the second report described above in embodiments are described below. It should be noted that the triggered, generated, or transmitted first report and second report mentioned in embodiments all refer to a certain category of reports rather than a certain specific report.

In a possible implementation, an embodiment of canceling the triggered second report is used as an independent embodiment, to resolve the technical problem of this application. In this case, the second report in this embodiment may be a report described above that includes the second uplink data and/or the second residual delay of the uplink data.

First, an implementation of triggering the second report is described. When a triggering condition of the second report is satisfied, the second report is triggered. The second report may be a BSR and/or a residual delay report. Then the triggering condition of the second report may be a triggering condition of a BSR or a triggering condition of a residual delay report. Next, if the uplink data is discarded, the triggered second report may be canceled.

When the uplink data is discarded, the triggered second report is canceled to ensure that the second report including the redundant uplink data volume and/or the redundant residual delay is not sent to the network device, and the network device does not schedule redundant uplink resources, thereby effectively avoiding a waste of resources.

In an implementation, after data discarding occurs, the triggered second report may be directly canceled. Alternatively, it may be further determined whether uplink data exists in the first channel. When no uplink data exists in the first channel, the triggered second report is canceled. The first channel may include at least one of the following: a logical channel, a logical channel group, a PDU set, and data burst information.

In an implementation, the foregoing described logical channel may be any one logical channel, or the foregoing described logical channel may also be a logical channel for triggering the second report. The foregoing described logical channel group may be any one logical channel group, or the foregoing described logical channel group may also be a logical channel group for triggering the second report. The foregoing described PDU set may be any one PDU set, or the foregoing described PDU set may also be a PDU set for triggering the second report. The foregoing described data burst information may be any data burst information, or the foregoing described data burst information may also be data burst information for triggering the second report. The first channel is set as a channel for triggering the second report, so that reasonableness of canceling triggering of the second report may be effectively ensured. In other words, the following implementations are provided:
Implementation 1: After data discarding occurs, it is determined whether uplink data exists in a logical channel, and a triggered second report is canceled when no uplink data exists in any one logical channel.

In an implementation, after the second report is triggered, uplink data is discarded before the second report is generated or transmitted, and the triggered second report is canceled when no uplink data exists in any one logical channel.

In an implementation, after the second report is triggered, uplink data is discarded during generation of the second report, and the triggered second report is canceled when no uplink data exists in any one logical channel.

In an implementation, after the uplink data is discarded and the triggered second report is canceled, a triggering condition of the second report may further be re-evaluated, and the second report is re-triggered when the triggering condition is satisfied.

Implementation 2: After data discarding occurs, it is determined whether uplink data exists in a logical channel group, and a triggered second report is canceled when no uplink data exists in any one logical channel group.

In an implementation, after the second report is triggered, uplink data is discarded before the second report is generated or transmitted, and the triggered second report is canceled when no uplink data exists in any one logical channel group.

In an implementation, after the second report is triggered, uplink data is discarded during generation of the second report, and the triggered second report is canceled when no uplink data exists in any one logical channel group.

In an implementation, after the uplink data is discarded and the triggered second report is canceled, a triggering condition of the second report may further be re-evaluated, and the second report is re-triggered when the triggering condition is satisfied.

Implementation 3: After data discarding occurs, it is determined whether uplink data exists in a PDU set, and a triggered second report is canceled when no uplink data exists in any one PDU set.

In an implementation, after the second report is triggered, uplink data is discarded before the second report is generated or transmitted, and the triggered second report is canceled when no uplink data exists in any one PDU set.

In an implementation, after the second report is triggered, uplink data is discarded during generation of the second report, and the triggered second report is canceled when no uplink data exists in any one PDU set.

In an implementation, after the uplink data is discarded and the triggered second report is canceled, a triggering condition of the second report may further be re-evaluated, and the second report is re-triggered when the triggering condition is satisfied.

Implementation 4: After data discarding occurs, it is determined whether uplink data exists in data burst information, and a triggered second report is canceled when no uplink data exists in any one piece of data burst information.

In an implementation, after the second report is triggered, uplink data is discarded before the second report is generated or transmitted, and the triggered second report is canceled when no uplink data exists in any one piece of data burst information.

In an implementation, after the second report is triggered, uplink data is discarded during generation of the second report, and the triggered second report is canceled when no uplink data exists in any one piece of data burst information.

In an implementation, after the uplink data is discarded and the triggered second report is canceled, a triggering condition of the second report may further be re-evaluated, and the second report is re-triggered when the triggering condition is satisfied.

Implementation 5: After data discarding occurs, it is determined whether uplink data exists in a logical channel, and a triggered second report is canceled when no uplink data exists in a logical channel for triggering the second report.

In an implementation, after the second report is triggered, uplink data is discarded before the second report is generated or transmitted, and the triggered second report is canceled when no uplink data exists in a logical channel for triggering the second report.

In an implementation, after the second report is triggered, uplink data is discarded during generation of the second report, and the triggered second report is canceled when no uplink data exists in a logical channel for triggering the second report.

In an implementation, after the uplink data is discarded and the triggered second report is canceled, a triggering condition of the second report may further be re-evaluated, and the second report is re-triggered when the triggering condition is satisfied.

Implementation 6: After data discarding occurs, it is determined whether uplink data exists in a logical channel group, and a triggered second report is canceled when no uplink data exists in a logical channel group for triggering the second report.

In an implementation, after the second report is triggered, uplink data is discarded before the second report is generated or transmitted, and the triggered second report is canceled when no uplink data exists in a logical channel group for triggering the second report.

In an implementation, after the second report is triggered, uplink data is discarded during generation of the second report, and the triggered second report is canceled when no uplink data exists in a logical channel group for triggering the second report.

In an implementation, after the uplink data is discarded and the triggered second report is canceled, a triggering condition of the second report may further be re-evaluated, and the second report is re-triggered when the triggering condition is satisfied.

Implementation 7: After data discarding occurs, it is determined whether uplink data exists in a PDU set, and a triggered second report is canceled when no uplink data exists in a PDU set for triggering the second report.

In an implementation, after the second report is triggered, uplink data is discarded before the second report is generated or transmitted, and the triggered second report is canceled when no uplink data exists in a PDU set for triggering the second report.

In an implementation, after the second report is triggered, uplink data is discarded during generation of the second report, and the triggered second report is canceled when no uplink data exists in a PDU set for triggering the second report.

In an implementation, after the uplink data is discarded and the triggered second report is canceled, a triggering condition of the second report may further be re-evaluated, and the second report is re-triggered when the triggering condition is satisfied.

Implementation 8: After data discarding occurs, it is determined whether uplink data exists in data burst information, and a triggered second report is canceled when no uplink data exists in data burst information for triggering the second report.

In an implementation, after the second report is triggered, uplink data is discarded before the second report is generated or transmitted, and the triggered second report is canceled when no uplink data exists in data burst information for triggering the second report.

In an implementation, after the second report is triggered, uplink data is discarded during generation of the second report, and the triggered second report is canceled when no uplink data exists in data burst information for triggering the second report.

In an implementation, after the uplink data is discarded and the triggered second report is canceled, a triggering condition of the second report may further be re-evaluated, and the second report is re-triggered when the triggering condition is satisfied.

For the 8 different implementations described above, after the triggered second report is canceled, whether the triggering condition of the second report needs to be re-evaluated may depend on the implementation. In other words, the triggering condition may or may not be re-evaluated. This is not limited in this embodiment.

If the triggering condition is re-evaluated, the re-triggered second report inevitably includes a data volume and/or a residual delay of the discarded uplink data. Therefore, a latest uplink data volume and/or residual delay may be reported through the re-triggered second report, thereby avoiding a waste of resources.

The content described above may be understood with reference to FIG. 4. As shown in FIG. 4, assuming that a second report a is triggered at a moment t1, and uplink data is discarded at a moment t2, the triggered second report a may be canceled at the moment t2. Alternatively, the triggered second report a may be canceled at a moment after the moment t2. This is not limited in this embodiment.

Then, whether the triggering condition of the second report a is satisfied may be re-evaluated. If the triggering condition is satisfied, a second report b may be triggered at a moment t3. A dashed box used in FIG. 4 shows that re-evaluation and execution of triggering the second report are optional. It may be understood that although the second report is triggered at both the t1 moment and the t3 moment, different reports are triggered at different moments, and a same type of second report is triggered.

In addition, FIG. 4 merely shows a possible case. In an actual implementation process, a time sequence of canceling the triggered second report and re-triggering the second report may be determined based on an actual requirement.

In another possible implementation, the second report in this embodiment may be the first report described above. A related implementation in which the second report is the first report is described below.

When uplink data is discarded, the triggered first report may be canceled, to ensure that the first report including the redundant uplink data volume and/or the redundant residual delay is not sent to the network device, and the network device does not schedule redundant uplink resources, thereby effectively avoiding a waste of resources.

In an implementation, after the uplink data is discarded, the triggered first report may be directly canceled. Alternatively, it may be further determined whether uplink data exists in the first channel. When no uplink data exists in the first channel, the triggered first report is canceled. The first channel may include at least one of the following: a logical channel, a logical channel group, a PDU set, and data burst information.

In an implementation, the foregoing described logical channel may be any one logical channel, or the foregoing described logical channel may also be a logical channel for triggering the first report. The foregoing described logical channel group may be any one logical channel group, or the foregoing described logical channel group may also be a logical channel group for triggering the first report. The foregoing described PDU set may be any one PDU set, or the foregoing described PDU set may also be a PDU set for triggering the first report. The foregoing described data burst information may be any data burst information, or the foregoing described data burst information may also be data burst information for triggering the first report. The first channel is set as a channel for triggering the first report, so that reasonableness of canceling triggering of the first report may be effectively ensured. In other words, the following implementations are provided:

Implementation 1: After data discarding occurs, it is determined whether uplink data exists in a logical channel, and a triggered first report is canceled when no uplink data exists in any one logical channel.

In an implementation, after the first report is triggered, uplink data is discarded before the first report is generated or transmitted, and the triggered first report is canceled when no uplink data exists in any one logical channel.

In an implementation, after the first report is triggered, uplink data is discarded during generation of the first report, and the triggered first report is canceled when no uplink data exists in any one logical channel.

In an implementation, after the uplink data is discarded and the triggered first report is canceled, a triggering condition of the first report may further be re-evaluated, and the first report is re-triggered when the triggering condition is satisfied.

Implementation 2: After data discarding occurs, it is determined whether uplink data exists in a logical channel group, and a triggered first report is canceled when no uplink data exists in any one logical channel group.

In an implementation, after the first report is triggered, uplink data is discarded before the first report is generated or transmitted, and the triggered first report is canceled when no uplink data exists in any one logical channel group.

In an implementation, after the first report is triggered, uplink data is discarded during generation of the first report, and the triggered first report is canceled when no uplink data exists in any one logical channel group.

In an implementation, after the uplink data is discarded and the triggered first report is canceled, a triggering condition of the first report may further be re-evaluated, and the first report is re-triggered when the triggering condition is satisfied.

Implementation 3: After data discarding occurs, it is determined whether uplink data exists in a PDU set, and a triggered first report is canceled when no uplink data exists in any one PDU set.

In an implementation, after the first report is triggered, uplink data is discarded before the first report is generated or transmitted, and the triggered first report is canceled when no uplink data exists in any one PDU set.

In an implementation, after the first report is triggered, uplink data is discarded during generation of the first report, and the triggered first report is canceled when no uplink data exists in any one PDU set.

In an implementation, after the uplink data is discarded and the triggered first report is canceled, a triggering condition of the first report may further be re-evaluated, and the first report is re-triggered when the triggering condition is satisfied.

Implementation 4: After data discarding occurs, it is determined whether uplink data exists in data burst information, and a triggered first report is canceled when no uplink data exists in any one piece of data burst information.

In an implementation, after the first report is triggered, uplink data is discarded before the first report is generated or transmitted, and the triggered first report is canceled when no uplink data exists in any one piece of data burst information.

In an implementation, after the first report is triggered, uplink data is discarded during generation of the first report, and the triggered first report is canceled when no uplink data exists in any one piece of data burst information.

In an implementation, after the uplink data is discarded and the triggered first report is canceled, a triggering condition of the first report may further be re-evaluated, and the first report is re-triggered when the triggering condition is satisfied.

Implementation 5: After data discarding occurs, it is determined whether uplink data exists in a logical channel, and a triggered first report is canceled when no uplink data exists in a logical channel for triggering the first report.

In an implementation, after the first report is triggered, uplink data is discarded before the first report is generated or transmitted, and the triggered first report is canceled when no uplink data exists in a logical channel for triggering the first report.

In an implementation, after the first report is triggered, uplink data is discarded during generation of the first report, and the triggered first report is canceled when no uplink data exists in a logical channel for triggering the first report.

In an implementation, after the uplink data is discarded and the triggered first report is canceled, a triggering condition of the first report may further be re-evaluated, and the first report is re-triggered when the triggering condition is satisfied.

Implementation 6: After data discarding occurs, it is determined whether uplink data exists in a logical channel group, and a triggered first report is canceled when no uplink data exists in a logical channel group for triggering the first report.

In an implementation, after the first report is triggered, uplink data is discarded before the first report is generated or transmitted, and the triggered first report is canceled when no uplink data exists in a logical channel group for triggering the first report.

In an implementation, after the first report is triggered, uplink data is discarded during generation of the first report, and the triggered first report is canceled when no uplink data exists in a logical channel group for triggering the first report.

In an implementation, after the uplink data is discarded and the triggered first report is canceled, a triggering condition of the first report may further be re-evaluated, and the first report is re-triggered when the triggering condition is satisfied.

Implementation 7: After data discarding occurs, it is determined whether uplink data exists in a PDU set, and a triggered first report is canceled when no uplink data exists in a PDU set for triggering the first report.

In an implementation, after the first report is triggered, uplink data is discarded before the first report is generated or transmitted, and the triggered first report is canceled when no uplink data exists in a PDU set for triggering the first report.

In an implementation, after the first report is triggered, uplink data is discarded during generation of the first report, and the triggered first report is canceled when no uplink data exists in a PDU set for triggering the first report.

In an implementation, after the uplink data is discarded and the triggered first report is canceled, a triggering condition of the first report may further be re-evaluated, and the first report is re-triggered when the triggering condition is satisfied.

Implementation 8: After data discarding occurs, it is determined whether uplink data exists in data burst information, and a triggered first report is canceled when no uplink data exists in data burst information for triggering the first report.

In an implementation, after the first report is triggered, uplink data is discarded before the first report is generated or transmitted, and the triggered first report is canceled when no uplink data exists in data burst information for triggering the first report.

In an implementation, after the first report is triggered, uplink data is discarded during generation of the first report, and the triggered first report is canceled when no uplink data exists in data burst information for triggering the first report.

In an implementation, after the uplink data is discarded and the triggered first report is canceled, a triggering condition of the first report may further be re-evaluated, and the first report is re-triggered when the triggering condition is satisfied.

For the 8 different implementations described above, after the triggered first report is canceled, whether the triggering condition of the first report needs to be re-evaluated may depend on the implementation. In other words, the triggering condition may or may not be re-evaluated. This is not limited in this embodiment.

If the triggering condition is re-evaluated, the re-triggered first report inevitably includes relevant data of the discarded uplink data. Therefore, a latest uplink data volume and/or residual delay may be reported through the re-triggered first report, thereby avoiding a waste of resources.

For example, the content described above may be understood with reference to FIG. 5. As shown in FIG. 5, assuming that a first report c is triggered at a moment t1, and uplink data is discarded at a moment t2, the triggered first report c may be canceled at the moment t2. Alternatively, the triggered first report c may be canceled at a moment after the moment t2. This is not limited in this embodiment.

Then, whether the triggering condition of the first report c is satisfied may be re-evaluated. If the triggering condition is satisfied, a first report d may be triggered at a moment t3. Moreover, a dashed box used in FIG. 5 shows that execution of re-evaluation is optional.

In addition, FIG. 5 merely shows a possible case. In an actual implementation process, a time sequence of canceling the triggered first report and re-triggering the first report may be determined based on an actual requirement.

The foregoing embodiments of FIG. 3 to FIG. 5 describe that after the uplink data is discarded, the triggered second report may be canceled. Whether to re-evaluate the triggering condition later may be selected based on an actual requirement. In another possible implementation, after the uplink data is discarded, the triggering condition may be directly re-evaluated. Whether to cancel the triggered second report in the process may be selected based on an actual requirement. An implementation of a latter embodiment is described below with reference to FIG. 6 to FIG. 8.

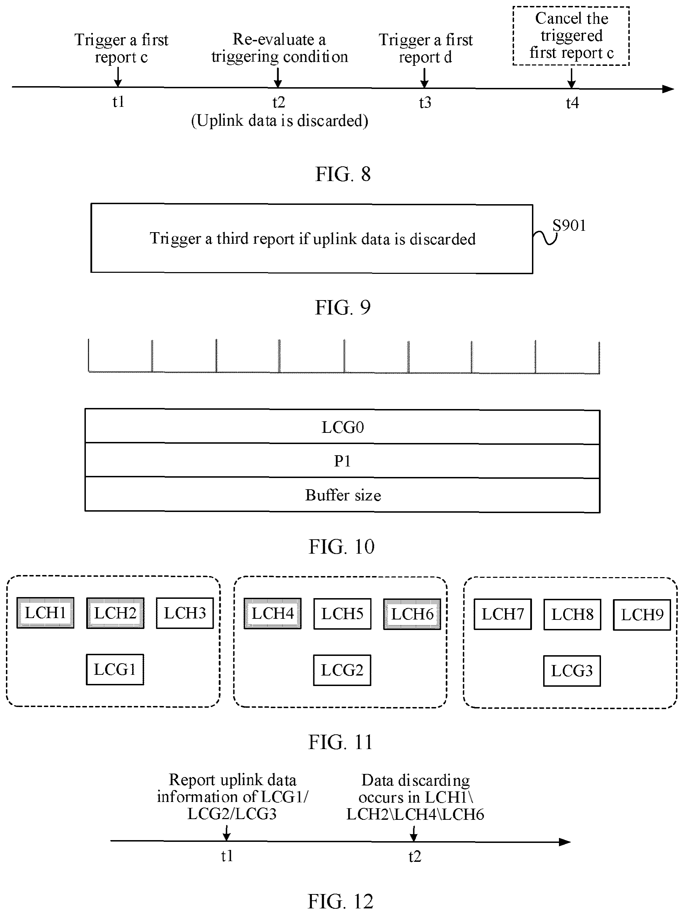

FIG. 6 is a flowchart III of an information processing method according to an embodiment of this application, FIG. 7 is a schematic diagram I of an implementation of re-evaluating a triggering condition according to an embodiment of this application, and FIG. 8 is a schematic diagram II of an implementation of re-evaluating a triggering condition according to an embodiment of this application.

As shown in FIG. 6, the method includes:
S601: Re-evaluate a triggering condition of a second report if uplink data is discarded.
S602: Re-trigger the second report when the triggering condition is satisfied.

In this embodiment, discarding of the uplink data may be discarding of a first data stream, the first data stream may be a data stream such as a PDU set or a data burst, and the first data stream may be a data stream including one or more data units (a PDU and an SDU).

In this embodiment, it may be determined, by obtaining indication information related to data discarding (which may be obtained from a network side or implemented through interaction inside a terminal device), whether the uplink data is discarded, so as to determine that the uplink data is discarded.

In this embodiment, S601 and S602 may also be described as re-triggering the second report if the uplink data is discarded.

In this embodiment, the second report may be the first report described above. In other words, the second report includes a latest first uplink data volume and/or a latest first residual delay.

Alternatively, the second report may be different from the first report described above. The second report includes a second uplink data volume and/or a second residual delay of the uplink data. A moment when the second uplink data volume and the second residual delay are determined is not limited in this embodiment, which may be determined at any moment after the second report is triggered. Therefore, whether the second uplink data volume in the second report is a data volume of the uplink data in a latest state and whether the second residual delay in the second report is a residual delay of the uplink data in a latest state are not limited in this embodiment.

Implementations of two cases of the second report described above in embodiments are described below. It should be noted that the triggered, generated, or transmitted first report and second report mentioned in embodiments all refer to a certain category of reports rather than a certain specific report.

In a possible implementation, re-evaluating the triggering condition to trigger the second report is used as an independent embodiment, to resolve the technical problem of this application. In this case, the second report in this embodiment may be a report described above that includes the second uplink data and/or the second residual delay of the uplink data.

If the uplink data is discarded, the triggering condition of the second report is re-evaluated, and the second report is re-triggered when it is determined that the triggering condition is satisfied. The re-triggered second report inevitably includes a data volume and/or a residual delay of the discarded uplink data. Therefore, a latest uplink data volume and/or residual delay may be reported through the re-triggered second report, thereby avoiding a waste of resources.

In this embodiment, after the uplink data is discarded, the triggering condition of the second report may be re-evaluated. Whether to cancel the triggered second report in the process may depend on the implementation. In other words, the triggered second report may be canceled or may not be canceled. This is not limited in this embodiment. If the triggered second report is to be canceled, a related implementation thereof is similar to that described in the foregoing embodiment, and details are not described herein again.

For example, the content described above may be understood with reference to FIG. 7. As shown in FIG. 7, assuming that a second report a is triggered at a moment t1, and uplink data is discarded at a moment t2, a triggering condition of the second report a may be re-evaluated. Assuming that it is determined at a moment t3 that the triggering condition is satisfied, then a second report b is triggered. It may be understood that although the second report is triggered at both the t1 moment and the t3 moment, different reports are triggered at different moments, and a same type of second report is triggered.

Optionally, the triggered second report a may be canceled at a moment t4. A dashed box used in FIG. 7 shows that execution of canceling the triggered second report is optional.

In addition, FIG. 7 merely shows a possible case. In an actual implementation process, a time sequence of canceling the triggered second report and re-triggering the second report may be determined based on an actual requirement. In addition, a moment when the triggering condition is re-evaluated and a moment when the uplink data is discarded may be a same moment, or the moment when the triggering condition is re-evaluated may be a moment after the uplink data is discarded.

In another possible implementation, the second report in this embodiment may be the first report described above. A related implementation in which the second report is the first report is described below.

If the uplink data is discarded, the triggering condition of the first report may be re-evaluated, and the first report is re-triggered when it is determined that the triggering condition is satisfied. The re-triggered first report inevitably includes a data volume and/or a residual delay of the discarded uplink data. Therefore, a latest uplink data volume and/or residual delay may be reported through the re-triggered first report, thereby avoiding a waste of resources.

In this embodiment, after the uplink data is discarded, the triggering condition of the first report may be re-evaluated. Whether to cancel the triggered first report in the process may depend on the implementation. In other words, the triggered first report may be canceled or may not be canceled. This is not limited in this embodiment. If the triggered first report is to be canceled, a related implementation thereof is similar to that described in the foregoing embodiment, and details are not described herein again.

For example, the content described above may be understood with reference to FIG. 8. As shown in FIG. 8, assuming that a first report c is triggered at a moment t1, and uplink data is discarded at a moment t2, a triggering condition of the first report c may be re-evaluated. Assuming that it is determined at a moment t3 that the triggering condition is satisfied, then a first report d is triggered.

Optionally, the triggered first report d may be canceled at a moment t4. A dashed box used in FIG. 8 shows that execution of canceling the triggered first report is optional.

In addition, FIG. 8 merely shows a possible case. In an actual implementation process, a time sequence of canceling the triggered first report and triggering the first report may be determined based on an actual requirement. In addition, a moment when the triggering condition is re-evaluated and a moment when the uplink data is discarded may be a same moment, or the moment when the triggering condition is re-evaluated may be a moment after the uplink data is discarded.

The foregoing embodiment describes that when a report is triggered but the report has not been sent, uplink data is discarded. In other words, a triggered report exists. In this case, the triggered corresponding report may be canceled, and the corresponding report may be re-triggered. However, another case is that the triggered report has been sent. In this case, if uplink data is discarded, the discarding of the uplink data may be used as a triggering condition to trigger the report because no triggered report exists, to update the reported uplink data volume and/or residual delay of the uplink data to a network device. Such a case in which uplink data is discarded after the report is sent is described below.

A description is provided with reference to FIG. 9. FIG. 9 is a flowchart IV of an information processing method according to an embodiment of this application.

As shown in FIG. 9, the method includes:
S901: Trigger a third report if uplink data is discarded, where the third report is used to update an uplink data volume and/or a residual delay of the uplink data.

In this embodiment, when the uplink data is discarded, a terminal device may have sent a report at least once, but has not received an uplink resource allocated by a network device. In this case, the third report may be triggered.

In this embodiment, the third report may be the first report or the second report described above. In this case, the third report may include the residual uplink data volume and/or the residual delay after the discarding. Alternatively, the third report may further be an independent report, that is, the third report is neither a BSR nor a residual delay report. In this case, the third report may include a volume of discarded uplink data and/or a residual delay of the discarded uplink data. Implementations of two cases of the third report in embodiments are described below.

The third report in this embodiment is used to update the uplink data volume and/or the uplink data volume. The "update" herein is described to provide a generalized description of two cases of the third report. Meanings of "update" in the two cases of the third report are further explained below.

When the third report is the first report or the second report, the third report may include the first uplink data volume and/or the first residual delay, and the second uplink data volume and/or the second residual delay. The third report is sent to the network device, so that the network device may timely determine a status of residual data after discarding, thereby updating a volume of uplink data that has been received previously and/or a residual delay of the uplink data, to update the reported data. In this case, steps of S901 may be further described as: triggering a third report if the uplink data is discarded, where the third report includes a first uplink data volume and/or a first residual delay, and a second uplink data volume and/or a second residual delay.

When the third report is an independent report, the third report may include a volume of discarded uplink data and/or a residual delay of the discarded uplink data. The third report is sent to the network device, so that the network device may timely determine a status of data discarding, thereby updating a volume of uplink data that has been received previously and/or a residual delay of the uplink data, to update the reported data. In this case, steps of S901 may be further described as: triggering a third report if the uplink data is discarded, where the third report includes a volume of discarded uplink data and/or a residual delay of the discarded uplink data.

Implementations in two cases of the third report are further described below.

First, a related implementation in which the third report is the first report or the second report described above is described. A format when the third report is the first report or the second report may be understood with reference to FIG. 10. FIG. 10 is a schematic diagram I of a format of a third report according to an embodiment of this application.

As shown in FIG. 10, the third report may include a buffer size (buffer size). When the third report is the first report, the buffer size in the third report is used to indicate the first uplink data volume described above. When the third report is the second report, the buffer size in the third report is used to indicate the second uplink data volume described above.

Additionally/alternatively, the third report may further include residual delay information. When the third report is the first report, the residual delay information in the third report is the first residual delay described above. When the third report is the second report, the residual delay information in the third report is the second residual delay described above.

In addition, referring to FIG. 10, the third report may further include cause indication information P1. The cause indication information is used to indicate that the third report is triggered due to discarding of uplink data. The cause indication information is related to the discarding of the uplink data, which may be used to indicate that data buffer information and/or the residual delay information included in the third report is obtained after the uplink data is discarded.

The cause indication information in this embodiment also has a plurality of possible implementations, which are respectively described below.

Implementation 1: The cause indication information is used to indicate that a third report is triggered due to discarding of uplink data, or the cause indication information is used to indicate that an uplink data volume and/or a residual delay included in the third report is obtained after the uplink data is discarded.

It may also be understood that the cause indication information is used to indicate that the uplink data is discarded.

In this implementation, the cause indication information does not indicate a specific first channel in which the uplink data is discarded.

In this implementation, for example, when the cause indication information is 1, it may indicate that the third report is triggered due to the discarding of the uplink data. However, the cause indication information does not indicate a specific first channel in which data discarding occurs.

Implementation 2: The cause indication information is used to indicate that a third report is triggered due to discarding of uplink data, and also indicates a first channel in which discarding occurs.

It may also be understood that the cause indication information is used to indicate that the uplink data is discarded in the first channel.

Alternatively, the cause indication information is used to indicate that the uplink data volume and/or the residual delay included in the third report is obtained after the uplink data is discarded, and further indicates a first channel in which discarding occurs.

It may also be understood that the cause indication information is used to indicate that the uplink data volume and/or the residual delay of the first channel in the third report is obtained after the uplink data is discarded.

In this implementation, the cause indication information may correspond to one first channel, one buffer data volume, and one piece of residual delay information. In other words, the cause indication information indicates that data discarding occurs in the first channel, and the buffer data volume and/or the residual delay information in the third report is obtained after the data discarding occurs in the first channel.

In an implementation, the cause indication information may include bits respectively corresponding to a plurality of first channels. When a bit corresponding to a certain first channel is 1, it indicates that data discarding occurs in the first channel. An example is used for description herein. Assuming that the cause indication information includes bits respectively corresponding to 8 logical channel groups, which are respectively represented as P0 to P7, and assuming that data discarding occurs in LCG0 and LCG1, P0 and P1 may be set as 1 in the cause indication information, to indicate that data discarding occurs in the LCG0 and the LCG1.

The third report is set to include the cause indication information, so that the network device quickly determines, based on the cause indication information, a reason why the third report is sent, or quickly determines that the uplink data volume and/or the residual delay included in the third report is obtained after the uplink data is discarded. If the third report is sent due to discarding of the uplink data, or obtained after the uplink data is discarded, the uplink data volume and/or the residual delay may be correspondingly updated in time, to determine latest uplink data information, and then allocate a correct uplink resource, thereby avoiding a waste of resources.

The cause indication information described above may be added to a short BSR MAC CE, or a short truncated BSR MAC CE, or a long BSR MAC CE, or a long truncated BSR MAC CE, or an extended short BSR MAC CE, or an extended short truncated BSR MAC CE. A specific format of the BSR is not limited in this embodiment.

A related implementation of a format of the third report is described above, and the format of the first report and the format of the second report described above are the same as the format of the third report described herein.

An implementation of triggering the third report when uplink data is discarded is further described below. The implementation of the first report and the implementation of the second report described above are the same as the implementation of the third report described herein.

Triggering of the third report is implemented on a MAC layer of a terminal device. However, loss of the uplink data occurs on an RLC layer or a PDCP layer. Therefore, a problem of how the MAC layer determines whether the uplink data is discarded occurs.

The MAC layer may receive higher-layer indication information, and the higher-layer indication information may indicate that uplink data is discarded. The higher-layer indication information may be sent by the RLC layer, or may be sent by the PDCP layer. After receiving the higher-layer indication information and determining that the uplink data is discarded, the MAC layer may trigger the third report based on the higher-layer indication information, and then generate and transmit the third report.

Further, the first channel in which discarding occurs may further be indicated in the higher-layer indication information. Then for example, after receiving the higher-layer indication information, the MAC layer may further determine, based on the higher-layer indication information, whether the first channel in which discarding occurs has triggered the third report.

If the first channel in which discarding occurs has triggered the third report, it indicates that the buffer data volume and/or residual delay information has been reported to the network device. In this case, the third report needs to be triggered, to update the data volume and/or the residual delay that has been reported to the network device.

Alternatively, if the first channel in which discarding occurs has not yet triggered the third report, it indicates that the buffer data volume and/or the residual delay information has not been reported to the network device. In this case, the third report does not need to be triggered to update the data volume and/or the residual delay. It is determined whether the first channel in which discarding occurs has triggered the third report, and then it is determined whether to trigger the third report, thereby effectively enhancing the necessity and effectiveness of triggering the third report.

The foregoing descriptions may be further understood through a specific example of discarding of uplink data with reference to FIG. 11 and FIG. 12. FIG. 11 is a schematic diagram of discarding an uplink data according to an embodiment of this application, and FIG. 12 is a schematic timing diagram of data discarding according to an embodiment of this application.

With reference to FIG. 11 and FIG. 12, it is assumed that uplink data information of three logical channel groups that are an LCG1, an LCG2, and an LCG3 is reported at a moment t1, that is, a buffer data volume and/or residual delay information, and it is assumed that an uplink data volume at the moment t1 is 10 MB.

Then at a moment t2, discarding of a PDU set occurs in an LCH1 and an LCH2 in the LCG1, and discarding of a PDU set occurs in an LCH4 and an LCH6 in the LCG2. It is assumed that a data volume of residual uplink data after the discarding occurs is 7 MB.

Based on the foregoing described content, if the uplink data is discarded, the third report may be triggered, and the third report may include a residual uplink data volume after the discarding, that is, 7 MB. In addition, the third report may further include cause indication information. The cause indication information may indicate that the third report is triggered due to discarding of uplink data. Further cause indication information may further indicate that first channels in which data discarding occurs are the LCG1 and the LCG2.

Based on the above, in this embodiment, the third report may be triggered after the uplink data is discarded. The third report may include a data volume and/or a residual delay of residual uplink data after the discarding, so that the network device may update previously received uplink data information based on related information of the residual uplink data after the discarding, thereby allocating a correct quantity of uplink resources, to avoid a waste of resources.

In another possible implementation, the third report may further be an independent report. An implementation in which the third report is an independent report is described below. The third report in this embodiment is an independent report for indicating the data volume and/or the residual delay of the discarded uplink data.

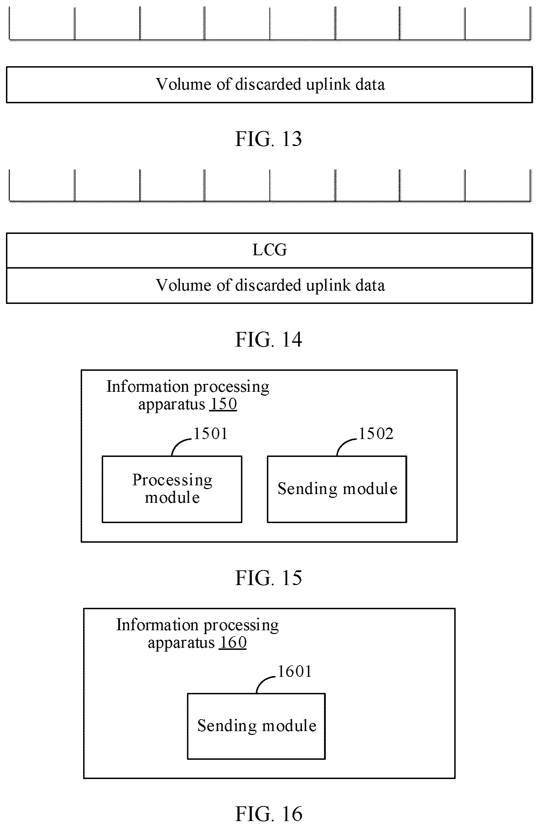

A format of the third report when being an independent report may be understood with reference to FIG. 13 and FIG. 14. FIG. 13 is a schematic diagram II of a format of a third report according to an embodiment of this application, and FIG. 14 is a schematic diagram III of a format of a third report according to an embodiment of this application.

Referring to FIG. 13, the third report may include a volume of discarded uplink data and/or delay information of the discarded uplink data.

For example, in an initial case, uplink data of 10 MB exists, and a data volume and/or a residual delay of the uplink data has been reported to a network device. Assuming that uplink data of 3 MB is discarded, the third report may include an uplink data volume of the discarded 3 MB uplink data and/or a residual delay of the 3 MB uplink data.

Then the network device may calculate, based on the volume of discarded uplink data and/or the delay information of the discarded uplink data in the third report, a residual uplink data volume after the discarding and/or a residual delay of the residual uplink data after the discarding.

Further, referring to FIG. 14, the third report may further include a first channel (an LCG shown in FIG. 14) corresponding to the discarded uplink data, so that the network device may determine a specific first channel in which uplink data is discarded.

Based on the above, in this embodiment, the third report may be triggered after the uplink data is discarded. The third report may include a data volume and/or a residual delay of discarded uplink data, so that the network device updates previously received uplink data information, thereby allocating a correct quantity of uplink resources, to avoid a waste of resources.

Related implementations on the terminal device side are described in the foregoing embodiments. On a network device side, configuration information may be sent to the terminal device, to instruct the terminal device to perform the content described in the foregoing embodiments. Related implementations on the network device side are described below.

In this embodiment, the network device may send configuration information to the terminal device, where the configuration information is used to indicate at least one of the following information:
whether a terminal device reports a latest first uplink data volume and/or a latest first residual delay of uplink data;
a first moment for determining the latest first uplink data volume or the latest first residual delay; a moment for determining a first resource for sending the first uplink data volume and/or the first residual delay; a moment when the first resource arrives; and at least one of moments when update indication information is obtained, where the update indication information is used to indicate discarding of the uplink data, or the update indication information is used to indicate a residual uplink data volume after the discarding and/or a residual delay of residual uplink data after the discarding;
whether the terminal device cancels the triggered second report when the uplink data is discarded;
first channel information, where the first channel information is used to determine whether to cancel the triggered second report;
whether the terminal device re-evaluates a triggering condition of the second report when the uplink data is discarded; and
whether the terminal device triggers a third report when the uplink data is discarded, where the third report is used to update an uplink data volume and/or a residual delay of the uplink data.

The foregoing information is described in sequence below:
Information 1: It is regarding whether a terminal device reports a latest first uplink data volume and/or a latest first residual delay of uplink data.

Specific indication manners of the configuration information for the information 1 include the following three cases:
Case I: The configuration information indicates whether the terminal device reports a latest first uplink data volume and/or a latest first residual delay of uplink data.

In this case, the configuration information has two configurable options for whether the terminal device is to report latest data. For example, the configuration information may include a corresponding indicating bit, which instructs the terminal device to report a latest first uplink data volume and/or a latest first residual delay of uplink data. Alternatively, the indicating bit may be 1 or 0, which instructs the terminal device not to report the latest first uplink data volume and/or the latest first residual delay of uplink data.

Case II: The configuration information instructs the terminal device to report a latest first uplink data volume and/or a latest first residual delay of uplink data.

In this case, the configuration information only indicates a positive case, that is, the configuration information directly indicates that the terminal device is to report the latest first uplink data volume and/or the latest first residual delay of uplink data.

Case III: The configuration information instructs the terminal device not to report a latest first uplink data volume and/or a latest first residual delay of uplink data.

In this case, the configuration information only indicates a negative case, that is, the configuration information directly indicates that the terminal device is not to report the latest first uplink data volume and/or the latest first residual delay of uplink data.

The terminal device may determine, based on indication of the configuration information for the currently introduced information 1, whether to incorporate the latest first uplink data volume and/or the latest first residual delay of the uplink data in the first report.

Information 2: It is regarding at least one of: a first moment for determining the latest first uplink data volume or the latest first residual delay; a moment for determining a first resource for sending the first uplink data volume and/or the first residual delay; a moment when the first resource arrives; and at least one of moments when the update indication information is obtained.

The configuration information may further indicate a specific implementation of the first moment, where the first moment may include at least one of the following: a moment for determining a first resource for sending the first uplink data volume and/or the first residual delay; a moment when the first resource arrives; and a moment when the update indication information is obtained.

Information 3: It is regarding whether the terminal device cancels the triggered second report when the uplink data is discarded.

Specific indication manners of the configuration information for the information 3 include the following three cases:
Case I: The configuration information indicates whether the terminal device cancels the triggered second report when the uplink data is discarded.

In this case, the configuration information has two configurable options for whether the terminal device needs to cancel the triggered second report when the uplink data is discarded. For example, the configuration information may include a corresponding indicating bit, thereby indicating that the terminal device is to cancel the triggered second report. Alternatively, the indicating bit may be 1 or 0, which indicates that the terminal device does not cancel the triggered second report.

Case II: The configuration information indicates that the terminal device cancels the triggered second report when the uplink data is discarded.

In this case, the configuration information indicates only a positive case, that is, the configuration information directly indicates that the terminal device cancels the triggered second report when the uplink data is discarded.

Case III: The configuration information indicates that the terminal device does not cancel the triggered second report when the uplink data is discarded.

In this case, the configuration information indicates only a negative case, that is, the configuration information directly indicates that the terminal device does not cancel the triggered second report when the uplink data is discarded.

The configuration information may allow, through indication information 3, the terminal device to determine whether the triggered second report needs to be canceled when the uplink data is discarded.

Information 4: It is first channel information, where the first channel information is used to determine whether to cancel the triggered second report.

Specific indication manners of the configuration information for the information 4 include the following three cases:
Case I: The configuration information indicates that the first channel information is used to determine whether to cancel the triggered second report.

In this case, the configuration information has two configurable options for determining whether to cancel the triggered second report through the first channel information. For example, the configuration information may include a corresponding indicating bit, thereby indicating that the first channel information is used to determine to cancel the triggered second report. Alternatively, the indicating bit may be 1 or 0, which indicates that the first channel information is used to determine that the triggered second report is not canceled.

Case II: The configuration information indicates that the first channel information is used to determine that the triggered second report is canceled.

In this case, the configuration information indicates only a positive case, that is, the configuration information directly indicates that the first channel information is used to determine that the triggered second report is canceled.

Case III: The configuration information indicates that the first channel information is used to determine that the triggered second report is not canceled.

In this case, the configuration information indicates only a negative case, that is, the configuration information directly indicates that the first channel information is used to determine that the triggered second report is not canceled.

Three different indication manners of the configuration information for the first channel information are described above. It may be understood that the foregoing is a description of a configuration manner of the network device, rather than an execution manner of the terminal device. Content and various cases specifically indicated by the first channel information in the information 4 are further described below.

It may be determined based on the foregoing description that when uplink data is discarded, the terminal device may directly cancel the triggered second report. Alternatively, it may be further determined whether uplink data exists in the first channel, so as to determine whether to cancel the triggered second report.

The first channel information herein may indicate whether the terminal device is to perform the step of "determining whether uplink data exists in the first channel". Specifically, at least one specific first channel may be indicated in the first channel information, or no specific first channel may be indicated in the first channel information. The two cases are respectively described below.

In an implementation, the first channel information indicates at least one specific first channel, and the terminal device may determine, based on the configuration information, whether uplink data exists in the specific first channel, thereby determining whether to cancel the triggered second report. Alternatively, further, it is determined whether uplink data exists in a first channel that has triggered a second report in a specific first channel, thereby determining whether to cancel the triggered second report.

An example is used for description herein. Assuming that LCG1-LCG8 exist, and an LCG1, an LCG2, and an LCG3 are indicated in the first channel information, the terminal device may determine, when uplink data is discarded, whether uplink data exists in the LCG1, the LCG2, and the LCG3, thereby determining whether to cancel the triggered second report. Further, the terminal device may further determine whether uplink data exists in an LCG that has triggered a second report in the LCG1, the LCG2, and the LCG3, thereby determining whether to cancel the triggered second report.

In another implementation, the first channel information does not indicate a specific first channel. In this case, the terminal device may determine, based on the configuration information, whether uplink data exists in any one first channel, thereby determining whether to cancel the triggered second report. Alternatively, further, it is determined whether uplink data exists in a first channel that has triggered a second report in any one first channel, thereby determining whether to cancel the triggered second report.

Information 5: It is regarding whether the terminal device re-evaluates a triggering condition of the second report when the uplink data is discarded.

Specific indication manners of the configuration information for the information 5 include the following three cases:
Case I: The configuration information indicates whether the terminal device re-evaluates a triggering condition of the second report when the uplink data is discarded.

In this case, the configuration information has two configurable options for whether the terminal device is to re-evaluate the triggering condition of the second report when uplink data is discarded. For example, the configuration information may include a corresponding indicating bit, thereby indicating that the terminal device is to re-evaluate the triggering condition of the second report. Alternatively, the indicating bit may be 1 or 0, which indicates that the terminal device does not re-evaluate the triggering condition of the second report.

Case II: The configuration information indicates that the terminal device re-evaluates a triggering condition of the second report when the uplink data is discarded.

In this case, the configuration information indicates only a positive case, that is, the configuration information directly indicates that the terminal device re-evaluates the triggering condition of the second report when the uplink data is discarded.

Case III: The configuration information indicates that the terminal device does not re-evaluate a triggering condition of the second report when the uplink data is discarded.

In this case, the configuration information indicates only a negative case, that is, the configuration information directly indicates that the terminal device does not re-evaluate the triggering condition of the second report when the uplink data is discarded.

The configuration information may allow, through indication information 5, the terminal device to determine whether the triggering condition of the second report needs to be re-evaluated when the uplink data is discarded. If the triggering condition of the second report needs to be re-evaluated, the terminal device re-triggers the second report when the triggering condition of the second report is satisfied.

Information 6: It is regarding whether the terminal device triggers a third report when the uplink data is discarded, where the third report is used to update an uplink data volume and/or a residual delay of the uplink data.

Specific indication manners of the configuration information for the information 5 include the following three cases:
Case I: The configuration information indicates whether the terminal device triggers a third report when the uplink data is discarded.

In this case, the configuration information has two configurable options for whether the terminal device needs to trigger the third report when the uplink data is discarded. For example, the configuration information may include a corresponding indicating bit, thereby indicating that the terminal device is to trigger the third report. Alternatively, the indicating bit may be 1 or 0, which indicates that the terminal device does not trigger the third report.

Case II: The configuration information indicates that the terminal device triggers the third report when the uplink data is discarded.

In this case, the configuration information indicates only a positive case, that is, the configuration information directly indicates that the terminal device triggers the third report when the uplink data is discarded.

Case III: The configuration information indicates that the terminal device does not trigger the third report when the uplink data is discarded.

In this case, the configuration information indicates only a negative case, that is, the configuration information directly indicates that the terminal device does not trigger the third report when the uplink data is discarded.

The configuration information may allow, through indication information 6, the terminal device to determine whether the third report needs to be triggered when the uplink data is discarded. For detailed content of the third report, reference may be made to the description of the foregoing embodiment, and details are not described herein again.

On the network device side, configuration information may be sent to a terminal device, to instruct the terminal device to report corresponding information or perform a corresponding action based on an instruction of the configuration information, thereby implementing content described in the foregoing embodiment, and effectively reducing a waste of resources.

FIG. 15 is a schematic structural diagram I of an information processing apparatus according to an embodiment of this application. As shown in FIG. 15, the apparatus 150 includes: a processing module 1501, where
the processing module 1501 is configured to generate a first report, where the first report includes a latest first uplink data volume, and/or includes a latest first residual delay of uplink data; and
a sending module 1502, configured to transmit the first report.

In a possible design, the latest first uplink data volume and/or the latest first residual delay is determined at a first moment; and
the first moment is at least one of the following: a moment for determining a first resource for sending the first report; a moment when the first resource arrives; and a moment when update indication information is obtained, where the update indication information is used to indicate discarding of the uplink data, or the update indication information is used to indicate a residual uplink data volume after the discarding and/or a residual delay of residual uplink data after the discarding.

In a possible design, the processing module 1501 is further configured to:
cancel a triggered second report if the uplink data is discarded.

In a possible design, the second report is the first report; or the second report includes a second uplink data volume and/or a second residual delay.

In a possible design, the processing module 1501 is further configured to:
cancel the triggered second report if the uplink data is discarded and no uplink data exists in a first channel, where the first channel includes at least one of the following: a logical channel, a logical channel group, a PDU set, and data burst information.

In a possible design, the logical channel is a logical channel that triggers the second report, the logical channel group is a logical channel group that triggers the second report, and the PDU set is a PDU set that triggers the second report, or the data burst information is data burst information that triggers the second report.

In a possible design, the processing module 1501 is further configured to:
re-evaluate a triggering condition of the second report if the uplink data is discarded; and
re-trigger the second report when the triggering condition is satisfied.

In a possible design, the processing module 1501 is further configured to:
trigger a third report if the uplink data is discarded, where the third report is used to update an uplink data volume and/or a residual delay of the uplink data.

In a possible design, the third report is the first report or the second report.

In a possible design, the terminal device includes a medium access control MAC layer, and the processing module 1501 is further configured to:
receive, through the MAC layer, higher-layer indication information, where the higher-layer indication information is used to indicate that the uplink data is discarded; and
trigger, through the MAC layer, the third report based on the higher-layer indication information.

In a possible design, the higher-layer indication information is used to indicate a first channel to which the discarded uplink data belongs; and
the processing module 1501 is further configured to:
determine, through the MAC layer based on the higher-layer indication information, whether the first channel to which the discarded uplink data belongs has triggered the third report; and
trigger the third report if so.

In a possible design, the third report includes cause indication information, and the cause indication information is used to indicate that the third report is triggered due to the discarding of the uplink data, or is used to indicate that an uplink data volume and/or a residual delay included in the third report is obtained after the uplink data is discarded.

In a possible design, the third report includes a volume of discarded uplink data and/or delay information of the discarded uplink data.

In a possible design, the third report further includes a first channel corresponding to the discarded uplink data.

In a possible design, the discarded uplink data includes at least one protocol data unit PDU set.

The apparatus provided in this embodiment may be configured to execute the technical solutions of the foregoing method embodiments. The implementation principles and technical effects thereof are similar, and details are not described again in this embodiment.

FIG. 16 is a schematic structural diagram II of an information processing apparatus according to an embodiment of this application. As shown in FIG. 16, the apparatus 160 includes a sending module 1601.

The sending module 1601 is configured to send configuration information, where the configuration information is used to indicate at least one of the following information:
whether a terminal device reports a latest first uplink data volume and/or a latest first residual delay of uplink data;
a first moment for determining the latest first uplink data volume or the latest first residual delay; a moment for determining a first resource for sending the first uplink data volume and/or the first residual delay; a moment when the first resource arrives; and at least one of moments when update indication information is obtained, where the update indication information is used to indicate discarding of the uplink data, or the update indication information is used to indicate a residual uplink data volume after the discarding and/or a residual delay of residual uplink data after the discarding;
whether the terminal device cancels the triggered second report when the uplink data is discarded;
first channel information, where the first channel information is used to determine whether to cancel the triggered second report;
whether the terminal device re-evaluates a triggering condition of the second report when the uplink data is discarded; and
whether the terminal device triggers a third report when the uplink data is discarded, where the third report is used to update an uplink data volume and/or a residual delay of the uplink data.

The apparatus provided in this embodiment may be configured to execute the technical solutions of the foregoing method embodiments. The implementation principles and technical effects thereof are similar, and details are not described again in this embodiment.

The information processing method provided in embodiments of this application may be applied to an electronic device having a communication function. The electronic device includes a terminal device. For a specific device form and the like of the terminal device, reference may be made to the foregoing related descriptions. Details are not described herein again.

An embodiment of this application provides a terminal device. The terminal device includes a processor and a memory. The memory stores a computer-executable instruction. The processor is configured to execute the computer-executable instruction stored in the memory, causing the terminal device to perform the foregoing method.

An embodiment of this application provides a chip. The chip includes a processor. The processor is configured to invoke a computer program in a memory, to perform the technical solutions in the foregoing embodiments. The implementation principles and technical effects thereof are similar to those in the foregoing related embodiments. Details are not described herein again.

An embodiment of this application further provides a computer-readable storage medium. The computer-readable storage medium stores a computer program. When the computer program is executed by the processor, the foregoing method is implemented. All or some of methods in the foregoing embodiments may be implemented through software, hardware, firmware, or any combination thereof. If implemented in software, a function may be stored on a computer-readable medium or transmitted on the computer-readable medium as one or more instructions or code. The computer readable medium may include a computer storage medium and a communications medium, and may further include any medium that may send a computer program from one place to another. The storage medium may be any target medium accessible to a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. In addition, any connection is appropriately referred to as a computer-readable medium. For example, if software is transmitted from a website, a server, or another remote source through a coaxial cable, an optical fiber cable, a twisted pair, a digital subscriber line (Digital Subscriber Line, DSL) or wireless technologies (such as infrared, radio, and microwave), the coaxial cable, the optical fiber cable, the twisted pair, the DSL, or the wireless technologies such as the infrared, the radio, and the microwave are included in the definition of the medium. The magnetic disk and the optical disc used herein include a compact disc, a laser disc, an optical disc, a digital versatile disc (Digital Versatile Disc, DVD), a floppy disk, and a Blu-ray disc. The magnetic disk generally reproduces data in a magnetic manner, and the optical disc reproduces data optically by using a laser. The foregoing combination should also be included in the scope of the computer-readable medium.

An embodiment of this application provides a computer program product. The computer program product includes a computer program. The computer program, when run, causes a computer to perform the foregoing method.

Embodiments of this application are described with reference to the flowcharts and/or block diagrams of the method, the device (system), and the computer program product according to embodiments of this application. It should be understood that computer program instructions can implement each process and/or block in the flowcharts and/or block diagrams and a combination of processes and/or blocks in the flowcharts and/or block diagrams. The computer program instructions may be provided for a general-purpose computer, a dedicated computer, an embedded processor, or a processing unit of another programmable device to generate a machine, so that the instructions executed by a computer or a processing unit of another programmable data processing device generate an apparatus for implementing a specific function in one or more processes in the flowcharts and/or in one or more blocks in the block diagrams.

In the foregoing specific implementations, the objectives, technical solutions, and beneficial effects of the present invention are further described in detail. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. An information processing method, applied to a terminal device, the method comprising:
generating or transmitting a first report, wherein the first report comprises a latest first uplink data volume, and/or comprises a latest first residual delay of uplink data.

2. The method according to claim 1, wherein the latest first uplink data volume and/or the latest first residual delay is determined at a first moment; and
the first moment is at least one of the following: a moment for determining a first resource for sending the first report; a moment when the first resource arrives; and a moment when update indication information is obtained, wherein the update indication information is used to indicate discarding of the uplink data, or the update indication information is used to indicate a residual uplink data volume after the discarding and/or a residual delay of residual uplink data after the discarding.

3. The method according to claim 1 or 2, further comprising:
canceling a triggered second report if the uplink data is discarded.

4. The method according to claim 3, wherein the second report is the first report, or the second report comprises a second uplink data volume and/or a second residual delay.

5. The method according to claim 3 or 4, wherein the canceling a triggered second report if the uplink data is discarded comprises:
canceling the triggered second report if the uplink data is discarded and no uplink data exists in a first channel, wherein the first channel comprises at least one of the following: a logical channel, a logical channel group, a PDU set, and data burst information.

6. The method according to claim 5, wherein the logical channel is a logical channel that triggers the second report, the logical channel group is a logical channel group that triggers the second report, and the PDU set is a PDU set that triggers the second report, or the data burst information is data burst information that triggers the second report.

7. The method according to any one of claims 1 to 6, further comprising:
re-evaluating a triggering condition of the second report if the uplink data is discarded; and
re-triggering the second report when the triggering condition is satisfied.

8. The method according to any one of claims 1 to 7, further comprising:
triggering a third report if the uplink data is discarded, wherein the third report is used to update an uplink data volume and/or a residual delay of the uplink data.

9. The method according to claim 8, wherein the third report is the first report or the second report.

10. The method according to claim 9, wherein the terminal device comprises a medium access control MAC layer, and the triggering a third report comprises:
receiving, by the MAC layer, higher-layer indication information, wherein the higher-layer indication information is used to indicate that the uplink data is discarded; and
triggering, by the MAC layer, the third report based on the higher-layer indication information.

11. The method according to claim 10, wherein the higher-layer indication information is used to indicate a first channel to which the discarded uplink data belongs; and
the triggering, by the MAC layer, the third report based on the higher-layer indication information comprises:
determining, by the MAC layer based on the higher-layer indication information, whether the first channel to which the discarded uplink data belongs has triggered the third report; and
triggering the third report if so.

12. The method according to any one of claims 9 to 11, wherein the third report comprises cause indication information, and the cause indication information is used to indicate that the third report is triggered due to the discarding of the uplink data, or is used to indicate that an uplink data volume and/or a residual delay comprised in the third report is obtained after the uplink data is discarded.

13. The method according to claim 8, wherein the third report comprises a volume of discarded uplink data and/or delay information of the discarded uplink data.

14. The method according to claim 13, wherein the third report further comprises a first channel corresponding to the discarded uplink data.

15. The method according to any one of claims 1 to 14, wherein the discarded uplink data comprises at least one protocol data unit PDU set.

16. An information processing method, applied to a terminal device, the method comprising:
canceling a triggered second report if the uplink data is discarded.

17. An information processing method, applied to a terminal device, the method comprising:
re-evaluating a triggering condition of the second report if the uplink data is discarded; and
re-triggering the second report when the triggering condition is satisfied.

18. An information processing method, applied to a terminal device, the method comprising:
triggering a third report if the uplink data is discarded, wherein the third report is used to update an uplink data volume and/or a residual delay of the uplink data.

19. An information processing method, applied to a network device, the method comprising:
sending configuration information, wherein the configuration information is used to indicate at least one of the following information:
whether a terminal device reports a latest first uplink data volume and/or a latest first residual delay of uplink data;
a first moment for determining the latest first uplink data volume or the latest first residual delay; a moment for determining a first resource for sending the first uplink data volume and/or the first residual delay; a moment when the first resource arrives; and at least one of moments when update indication information is obtained, wherein the update indication information is used to indicate discarding of the uplink data, or the update indication information is used to indicate a residual uplink data volume after the discarding and/or a residual delay of residual uplink data after the discarding;
whether the terminal device cancels the triggered second report when the uplink data is discarded;
first channel information, wherein the first channel information is used to determine whether to cancel the triggered second report;
whether the terminal device re-evaluates a triggering condition of the second report when the uplink data is discarded; and
whether the terminal device triggers a third report when the uplink data is discarded, wherein the third report is used to update an uplink data volume and/or a residual delay of the uplink data.

20. An information processing apparatus, comprising:
a processing module, configured to generate a first report, wherein the first report comprises a latest first uplink data volume, and/or comprises a latest first residual delay of uplink data; and
a sending module, configured to transmit the first report.

21. An information processing apparatus, comprising:
a sending module, configured to send configuration information, wherein the configuration information is used to indicate at least one of the following information:
whether a terminal device reports a latest first uplink data volume and/or a latest first residual delay of uplink data;
a first moment for determining the latest first uplink data volume or the latest first residual delay; a moment for determining a first resource for sending the first uplink data volume and/or the first residual delay; a moment when the first resource arrives; and at least one of moments when update indication information is obtained, wherein the update indication information is used to indicate discarding of the uplink data, or the update indication information is used to indicate a residual uplink data volume after the discarding and/or a residual delay of residual uplink data after the discarding;
whether the terminal device cancels the triggered second report when the uplink data is discarded;
first channel information, wherein the first channel information is used to determine whether to cancel the triggered second report;
whether the terminal device re-evaluates a triggering condition of the second report when the uplink data is discarded; and
whether the terminal device triggers a third report when the uplink data is discarded, wherein the third report is used to update an uplink data volume and/or a residual delay of the uplink data.

22. A terminal device, comprising: a processor and a memory, wherein
the memory stores a computer-executable instruction; and
the processor executes the computer-executable instruction stored in the memory, so that the terminal device performs the method according to any one of claims 1 to 18.

23. A network device, comprising: a processor and a memory, wherein
the memory stores a computer-executable instruction; and
the processor executes the computer-executable instruction stored in the memory, so that the network device performs the method according to claim 19.

24. A computer-readable storage medium, storing a computer program, wherein the computer program, when executed by a processor, implements the method according to any one of claims 1 to 19.
